# NEUE EUROPÄISCHE PATENTSCHRIFT

(11) **EP 3 695 991 B2**
(45) Veröffentlichungstag und Bekanntmachung des Hinweises auf die Entscheidung über den Einspruch: **04.11.2026**
(45) Hinweis auf die Patenterteilung: 17.04.2024
(21) Anmeldenummer: 20157031.4
(22) Anmeldetag: 12.02.2020
(51) Int. Cl.: B60D 1/173, B60D 1/48

(54) **ROUTENZUGANORDNUNG ODER SCHLEPPVERBUND**
ROUTE ACCESS ARRANGEMENT OR TOWING TRAIN
SYSTÈME DE TRAIN ROUTIER OU CONVOI REMORQUÉ

(30) Priorität: 17.02.2019 DE 102019103948; 18.02.2019 DE 102019104045
(43) Veröffentlichungstag der Anmeldung: 19.08.2020
(73) Patentinhaber: K. Hartwall GmbH, 21258 Heidenau (DE)
(72) Erfinder: Haltermann, Frank, 21258 Heidenau (DE)
(74) Vertreter: Holz, Christian

(56) Entgegenhaltungen:
- EP-A2- 3 034 334
- EP-A2- 3 034 334
- DE-A1- 102011 106 842
- DE-A1- 102011 106 842
- DE-A1- 102016 121 095
- FR-A- 363 084
- FR-A- 363 084

## Beschreibung

Die vorliegende Erfindung betrifft eine Routenzuganordnung oder einen Schleppverbund gemäß dem Oberbegriff des Patentanspruchs 1. FR 363084 A offenbart eine Routenzuganordnung oder einen Schleppverbund.

Das Gebiet der Intralogistik betrifft die Waren- und Materialflüsse innerhalb von Unternehmen. In der Produktion müssen Komponenten und Zwischenprodukte den Fertigungsschritten zugeführt und danach zur Weiterverarbeitung oder Verpackung abgeholt werden. Im Versand sind Lagerwaren für die Versendung zu kommissionieren. Hierfür werden bei größeren Transportmengen und -wegen sogenannte Routenzüge, Trailerzüge oder Logistikzüge eingesetzt, die auch als Routenzuganordnung und zusammen mit einem Zugfahrzeug auch als Schleppverbund bezeichnet werden können. Eine Routenzuganordnung besteht im Allgemeinen aus drei bis vier Routenzugelementen oder Routenzuganhängern. Die Routenzuganordnung kann in Routenzüge unterteilt werden, welche jeweils wenigstens zwei Routenzugelemente aufweisen. Der Fahrer fährt mit seinem Schleppverbund die verschiedenen Stationen im Lager, in der Produktion, im Warenausgang etc. an, hält dort und ent- bzw. belädt die einzelnen Routenzugelemente je nach Auftrag.

Um größere Warenmengen schneller und einfacher be- und entladen zu können, sind Routenzugelemente bekannt, die mit z.B. Paletten oder Gitterboxen beladene Logistikelemente wie z.B. Rollwagen oder Rollgestelle, auch Trolleys genannt, als Ganzes aufnehmen und transportieren können. Zur Aufnahme eines Logistikelements wird das Routenzugelement abgesenkt, das Logistikelement auf eine Aufnahme des Routenzugelements aufgeschoben und das Routenzugelement dann wieder angehoben, damit die Rollen des Logistikelements während der Fahrt mit den Schleppverbund den Untergrund nicht berühren, hierdurch geschont werden und dessen Fahreigenschaften nicht beeinflussen. Die Entnahme eines Logistikelements erfolgt in der umgekehrten Reihenfolge der o.g. Schritte.

Alleine aufgrund ihrer Gestell- bzw. Rahmenform sind verschiedene Arten von Routenzugelementen bekannt. Sehr häufig werden Routenzugelemente mit einem C-förmigen, senkrecht zur Fahrtrichtung einseitig offenem Gestell verwendet, in welches das Logistikelement seitlich von einer Seite eingeschoben und entnommen werden kann. Auch sind Routenzugelemente bekannt, die ein E-förmiges Gestell mit einer Gabel in der Mitte aufweisen. In diesem Fall kann das Logistikelement ebenfalls von einer Seite seitlich zwischen die vordere und hintere Kante des E-Rahmens, aber über dessen mittlere Gabel drüber, in den Rahmen eingeschoben werden. Ferner sind sog. Überladerahmen bekannt, welche, der zuvor beschriebenen Nomenklatur folgend, auch teilweise als B-Rahmen bezeichnet werden. Ein Überladerahmen weist ein Gestell mit einer in Längs- bzw. Fahrtrichtung mittig angeordneten Achse auf, an die sich in Längs- bzw. Fahrtrichtung davor und dahinter jeweils ein flacher Bereich als Logistikelementaufnahme anschließt, auf den ein Logistikelement von beiden Seiten aufgeschoben sowie entnommen werden kann. Des Weiteren sind sog. Portalrahmen bekannt, welche nach unten und zu beiden Seiten hin offen sind. Es sind Ausführungen bekannt, bei denen die Verbindung einer mittleren Achse mit einem Räderpaar und der in Längs- bzw. Fahrtrichtung vorderen und hinteren Kante des Rahmens über dem Gestell über die Zwischenräume hinüber stattfindet, in welche jeweils ein Logistikelement von beiden Seiten eingeschoben und entnommen werden kann.

Alle diese Arten von Routenzugelementen haben gemeinsam, dass jeweils zwei Räder mit einer starren Achse das Fahrwerk des Routenzugelements bilden, welches üblicherweise in der Fahrtrichtung mittig am Routenzugelement angeordnet ist. Das Gestell des Routenzugelements kann zusammen mit dem aufgenommenen Logistikelement üblicherweise rein vertikal angehoben sowie abgesenkt werden. Die Realisierung dieser Hebefunktionen kann mittels elektrischer Energie oder durch einen hydraulischen oder pneumatischen Druck erfolgen, welcher üblicherweise vom Zugfahrzeug zur Verfügung gestellt wird. Derartige Routenzugelemente sowie korrespondierende Logistikelemente sind z.B. von den Firmen Still, Linde, Jungheinrich, Jung Hebetechnik, LR Intralogistik sowie A&A Logistik-Equipment bekannt.

Die EP 2 161 182 A2 beschreibt einen einachsigen Trailerzuganhänger mit einem einseitig geöffneten E-förmigen Rahmen mit einem mittleren Querträger. An dem mittleren Querträger sind zwei Führungsrollen auf einer starren Achse unabhängig voneinander drehbar angeordnet. Der E-förmige Rahmen kann gegenüber der Achse mit den zwei Führungsrollen senkrecht angehoben bzw. abgesenkt werden. Vergleichbare einachsigen Trailerzuganhänger werden auch in der EP 2 311 673 B1, in der EP 2 808 234 A1, in der DE 10 2012 017 838 A1, in der DE 20 2015 104 465 U1 sowie in der E 20 2013 102 199 U1 beschrieben.

Die DE 20 2014 101 510 U1 beschreibt einen Trailerzuganhänger mit einem B-förmigen Traggestell, d.h. mit einem Überladerahmen. Das Traggestell samt zweier Auffahrt- und Ablauframpen kann mittels einer Hubeinrichtung, die zwischen dem Traggestell und der Achse des mittig angeordneten Fahrwerks angeordnet ist, rein vertikal angehoben und abgesenkt werden. Die starre Achse des mittig angeordneten Fahrwerks ist quer zur Fahrtrichtung angeordnet und weist an beiden Enden jeweils ein Rad auf.

Die EP 2 818 389 A1 beschreibt einen Portalanhänger für einen Routenzug. Der mittlere Anhängerabschnitt weist ein Paar von Rollen auf, die an einer Drehachse senkrecht zur Anhängerlängsrichtung vorgesehen sind. Die Rollen sind starr an dem mittleren Anhängerabschnitt angeordnet und besitzen miteinander fluchtende Drehachsen. Der mittlere Anhängerabschnitt ist mit einer Hubeinrichtung ausgestattet, die es erlaubt, den mittleren Anhängerabschnitt und über die portalförmigen Bögen auch den vorderen und hinteren Anhängerabschnitt rein vertikal anzuheben.

Die zuvor genannten bekannten Routenzugelemente haben gemeinsam, dass die Routenzugelemente in der Bewegungsrichtung bzw. in der Fahrtrichtung des Schleppverbunds in der Horizontalen starr miteinander verbunden sind. So weist z.B. das Routenzugelement der DE 10 2012 017 838 A1 eine starre Deichsel auf, welche starr an dem Rahmen bzw. an dem Gestell angeordnet ist und sich in der Bewegungsrichtung bzw. Fahrtrichtung des Schleppverbunds horizontal zu einem anderen Routenzugelement oder zum Zugfahrzeug hin erstreckt, um dort in eine Anhängevorrichtung einzugreifen. Hierdurch können zwei Routenzugelemente miteinander verbunden werden, um die Bewegung des Schleppverbunds in dessen Bewegungsrichtung bzw. Fahrtrichtung sowie um gegenüber einander Bewegungen um die vertikale Achse, d.h. um die Hochachse, der Verbindung von Deichsel und Anhängevorrichtung wie z.B. Kurvenfahrten ausführen zu können.

Nachteilig hierbei ist jedoch, dass sich das Absenken bzw. das Anheben eines Routenzugelements eines derartigen Schleppverbunds aufgrund ihrer horizontal starren Kopplung untereinander auch auf die unmittelbar benachbarten beiden Routenzugelemente bzw. auf ein Routenzugelement und das Zugfahrzeug auswirkt. Somit können üblicherweise lediglich Absenkbewegungen bzw. Anhebebewegungen geringer Höhe ausgeführt werden, ohne dass diese Bewegungen durch die starre Kopplung behindert bzw. verhindert werden. Dies kann in dem Maße erfolgen, wie es der Abstand zwischen den Routenzugelementen bzw. dem Routenzugelement und dem Zugfahrzeug sowie das Spiel der Verbindung von Deichsel und Anhängevorrichtung zulassen.

Die DE 10 2011 106 842 A1 betrifft einen Routenzug mit mindestens einem Anhänger, wobei mindestens eine Verbindung zwischen Zugfahrzeug und Anhänger oder eine Verbindung zwischen zwei Anhängern aus zwei sich kreuzenden Lenkern besteht. Die Verbindung mittels zwei sich kreuzender Lenker kann auch als Scherenkopplung bezeichnet werden.

Das Routenzugelement der DE 10 2011 106 842 A1 weist somit ebenfalls eine in der Horizontalen starre Verbindung mit einem weiteren gleichartigen Routenzugelement bzw. mit einem entsprechenden Zugfahrzeug auf. Da eine Scherenkopplung jedoch in der Fahrtrichtung sehr kurz baut, fehlt es dieser starren Verbindung, im Gegensatz zu einer Verbindung von Deichsel und Anhängevorrichtung, an einem ausreichend langen Weg zwischen den beiden Routenzugelementen bzw. zwischen dem Routenzugelement und dem Zugfahrzeug, um über ein Spiel der Kontaktstellen zwischen den Lenkern der Scherenkopplung und dem Routenzugelement bzw. dem Zugfahrzeug Absenkbewegungen bzw. Anhebebewegungen zuzulassen. Auch wirken gleich zwei horizontal starre Verbindungselemente zwischen zwei Routenzugelementen bzw. zwischen dem Routenzugelement und dem Zugfahrzeug. Ferner bewirkt die überkreuzende Anordnung der Lenker der Scherenkopplung eine besonders starre horizontale Verbindung. Somit können Routenzuganordnungen, deren Routenzugelemente mittels Scherenkopplungen miteinander verbunden sind, nur gemeinsam abgesenkt und angehoben werden. Andernfalls wird das Absenken bzw. das Anheben eines Routenzugelements durch das benachbarte Routenzugelement verhindert oder zumindest behindert.

Eine Aufgabe der vorliegenden Erfindung ist es, eine Routenzuganordnung oder einen Schleppverbund der eingangs beschriebenen Art bereit zu stellen, so dass das Absenken bzw. das Anheben eines Routenzugelements gegenüber einem weiteren Routenzugelement bzw. gegenüber einem Zugfahrzeug auch bei Verwendung einer Scherenkopplung ermöglicht wird. Zusätzlich oder alternativ soll die Rampenfähigkeit der Routenzuganordnung oder des Schleppverbunds erhöht werden. Zumindest soll eine Alternative zu bekannten Lösungen bereitgestellt werden.

Die Aufgabe wird erfindungsgemäß durch eine Routenzuganordnung oder durch einen Schleppverbund mit den Merkmalen des Patentanspruchs 1 gelöst. Vorteilhafte Weiterbildungen sind in den Unteransprüchen beschrieben.

Somit betrifft die Erfindung eine Routenzuganordnung oder einen Schleppverbund mit einem Routenzugelement, welches ausgebildet ist, wenigstens ein Logistikelement aufzunehmen, und mit einem weiteren Routenzugelement, welches ausgebildet ist, wenigstens ein Logistikelement aufzunehmen, und bzw. oder mit einem Zugfahrzeug. Die beiden Routenzugelemente können ausgebildet sein, gleiche oder unterschiedliche Logistikelemente wie z.B. Trolleys aufzunehmen. Die beiden Routenzugelemente, welches auch als Routenzuganhänger bezeichnet werden können, können jeweils einen C-Rahmen oder einen E-Rahmen aufweisen und lediglich von einer Seite zu be- und entladen sein. Die beiden Routenzugelemente können aber auch ein B-Rahmen bzw. ein Überladerahmen oder ein Portalrahmen aufweisen und von beiden Seiten zu be- und entladen sein.

Unter einer Routenzuganordnung sind wenigstens zwei miteinander verbundene Routenzugelemente zu verstehen. Zwei miteinander verbundene Routenzugelemente können auch als Routenzug bezeichnet werden, wobei diese starr miteinander verbunden sind, wie weiter unten noch näher beschrieben werden wird. Unter einem Schleppverbund ist wenigstens ein Routenzugelement zu verstehen, welches mit einem Zugfahrzeug verbunden ist. Es können auch zwei und mehr Routenzugelemente als Routenzuganordnung mit einem Zugfahrzeug zu einem Schleppverbund verbunden werden.

Die Routenzuganordnung oder der Schleppverbund ist dadurch gekennzeichnet, dass das Routenzugelement (jeweils) mittels einer flexiblen Scherenkopplung mit dem weiteren Routenzugelement und bzw. oder mit dem Zugfahrzeug verbunden ist. Mit anderen Worten kann das Routenzugelement an seinem einen Ende mittels einer flexiblen Scherenkopplung entweder mit dem weiteren Routenzugelement oder mit dem Zugfahrzeug verbunden sein. Auch kann das Routenzugelement an seinem einen Ende mittels einer flexiblen Scherenkopplung mit dem weiteren Routenzugelement und an seinem anderen Ende mittels einer weiteren flexiblen Scherenkopplung mit dem Zugfahrzeug verbunden sein.

Es ist bekannt, derartige Routenzugelemente mittels einer starren Scherenkopplung miteinander bzw. mit dem Zugfahrzeug zu verbinden, wie es beispielsweise aus der DE 10 2011 106 842 A1 bekannt ist. Die Nachteile, die sich aus der Verwendung derartiger starrer Scherenkopplungen bei Routenzugelementen ergeben können, wurden zuvor beschrieben.

Um diese Nachteile teilweise oder vollständig zu vermeiden oder zumindest zu reduzieren wird erfindungsgemäß stattdessen eine flexible Scherenkopplung verwendet. Unter einer flexiblen Scherenkopplung ist, im Gegensatz zu der bekannten starren Scherenkopplung, eine Scherenkopplung zu verstehen, welche konstruktiv bedingt ausreichend räumliche Flexibilität besitzt bzw. zulässt, so dass die beiden mittels der flexiblen Scherenkopplung verbundenen Routenzugelemente gegenüber einander bzw. das Routenzugelement gegenüber dem Zugfahrzeug in der vertikalen Richtung abgesenkt und angehoben werden können, ohne dass hierbei eine Behinderung oder Blockade des Absenkens und Anhebens auftreten kann. Dies kann über mechanische Verbindungselemente wie z.B. Kugelkopfgelenke oder dergleichen erfolgen, wie weiter unten noch näher beschrieben werden wird. Alternativ können auch elastische Verbindungselemente wie z.B. Gummiverbindungen, insbesondere Gummiblöcke oder Silentblöcke, verwendet werden. Es können auch Seile verwendet werden, welche zwischen den beiden Routenzugelementen bzw. dem Routenzugelement und dem Zugfahrzeug angeordnet sein können. Auch können Kombinationen hierauf verwendet werden.

Auf diese Art und Weise kann erfindungsgemäß das Routenzugelement gegenüber dem weiteren Routenzugelement und bzw. oder gegenüber dem Zugfahrzeug wie zuvor beschrieben angehoben und abgesenkt werden, ohne dass diese Bewegung behindert oder verhindert wird bzw. ohne dass sich diese Bewegung auf das weitere Routenzugelement und bzw. oder auf das Zugfahrzeug auswirkt. Das Absenken und Anheben des Routenzugselements kann beidseitig oder einseitig erfolgen, wie weiter unten noch näher beschrieben werden wird.

Hierdurch kann es vermieden werden, dass alle Routenzugelemente einer Routenzuganordnung gemeinsam abgesenkt und angehoben werden müssen, wie bisher bekannt. Dies kann in vielen Fällen unnötig sein, da üblicherweise an einem Zwischenstopp eines Weges des Schleppverbunds nur ein Logistikelement abzugeben, aufzunehmen oder auszutauschen ist, ggfs. auch mehrere Logistikelemente, jedoch üblicherweise nicht alle Logistikelemente. Werden dennoch alle Routenzugelemente des Schleppverbunds gemeinsam abgesenkt und angehoben, so führt die zu einem unnötigen Aufwand in Form von Energieverbrauch sowie Abnutzung der Routenzugelemente. Dieser unnötige Aufwand kann erfindungsgemäß dadurch verwendet werden, dass zumindest einige Routenzugelemente nicht abgesenkt werden müssen, um das Absenken eines Routenzugelements zu ermöglichen. Dies gilt insbesondere für bisher bekannte starre Scherenkopplungen, bei denen ein Absenken eines Routenzugelements auch das Absenken des Zugfahrzeugs erfordert, was erfindungsgemäß durch die Verwendung einer flexiblen Scherenkopplung vermieden werden kann. Auch kann die Rampenfähigkeit der Routenzuganordnung oder des Schleppverbunds verbessert werden.

Erfindungsgemäß weist die flexible Scherenkopplung zwei sich kreuzende Verbindungselemente auf, welche wenigstens einseitig, vorzugsweise beidseitig, mittels jeweils einer flexiblen Halterungselementaufnahme mit einem Halterungselement eines der Routenzugselemente oder des Zugfahrzeugs verbunden sind. Die Verwendung sich kreuzender Verbindungselemente ermöglicht die Umsetzung einer Scherenkopplung, so dass deren Vorteile genutzt werden können. Die Verbindungselemente dabei mit flexiblen Halterungselementaufnahmen zu versehen und hierüber die Verbindung zu einem korrespondierenden Halterungselement eines der Routenzugselemente oder des Zugfahrzeugs herzustellen ermöglicht eine einfache und stabile Umsetzung einer flexiblen Scherenkopplung.

Dabei kann das Paar von Verbindungselementen, welche auch als Lenker oder Gestänge bezeichnet werden können, an wenigstens derselben Seite jeweils eine flexible Halterungselementaufnahme aufweisen und an dem jeweils gegenüberliegende Ende nicht, so dass zumindest eine erhöhte Beweglichkeit in der vertikalen Richtung erreicht werden kann.

Vorzugsweise weisen jedoch beide Verbindungselemente an beiden Enden jeweils eine flexible Halterungselementaufnahme auf, so dass die hierdurch miteinander verbundenen Routenzugelemente bzw. das Routenzugelement und das Zugfahrzeug relativ zueinander in der vertikalen Richtung deutlich unabhängiger voneinander bewegt werden können als bisher bekannt, ohne dass die Nachteile einer bekannten starren Scherenkopplung auftreten.

Gemäß einem Aspekt der Erfindung ist die flexible Halterungselementaufnahme als Kugelkopfgelenk ausgebildet, welches das Halterungselement als Bolzen aufnimmt. Hierdurch kann eine mechanisch einfache, kostengünstige sowie robuste, wartungsarme und bzw. oder langlebige flexible Kopplung umgesetzt werden.

Gemäß einem weiteren Aspekt der Erfindung weist das Kugelkopfgelenk eine Kugelkalotte auf, welche am Bolzen angeordnet ist, und das Kugelkopfgelenk weist eine Kugelkalottenaufnahme auf, welche am Verbindungselemente angeordnet ist. Hierdurch kann eine mechanisch einfache, kostengünstige sowie robuste, wartungsarme und bzw. oder langlebige flexible Kopplung umgesetzt werden.

Erfindungsgemäß ist die flexible Halterungselementaufnahme in der vertikalen Richtung beweglich an dem Halterungselement angeordnet. Dies kann das Maß erhöhen, um das die beiden Routenzugelemente der Routenzuganordnung und bzw. oder das Routenzugelement und das Zugfahrzeug gegenüber einander in der vertikalen Richtung beweglich zueinander sind, da die flexible Halterungselementaufnahme zusätzlich in der vertikalen Richtung bewegt werden kann. Dies kann sowohl dem voneinander unabhängigen Absenken und Anheben sowie der Rampenfähigkeit zugute kommen.

Gemäß einem weiteren Aspekt der Erfindung weist die flexible Scherenkopplung wenigstens einen Abstandshalter auf, welcher ausgebildet und angeordnet ist, die flexible Halterungselementaufnahme in der vertikalen Richtung oberhalb einer vorbestimmten Höhe zu halten. Ein derartiger Abstandshalter kann vorzugsweise bei lediglich einem der Verbindungselemente angewendet werden, um dieses in der vertikalen Richtung auf der erforderlichen Höhe gegenüber dem anderen Verbindungselement zu halten, so dass diese sich überkreuzend übereinander geführt werden können. Dies kann zu einer vorbestimmten Anordnung der beiden Verbindungselemente zueinander zumindest dann führen, wenn beide Verbindungselemente in der vertikalen Richtung ihre unterste Position einnehmen.

Gemäß einem weiteren Aspekt der Erfindung umschließt der Abstandshalter das Halterungselement zumindest abschnittsweise. Dies kann einen einfachen und sicheren Halt des Abstandshalters gegenüber dem Halterungselement ermöglichen.

Gemäß einem weiteren Aspekt der Erfindung ist das Halterungselement gegenüber der flexiblen Halterungselementaufnahme entfernbar ausgebildet. Insbesondere kann das Halterungselement als Bolzen aus der Halterungselementaufnahme nach oben hin herausgezogen werden. Dies kann ein einfaches Trennen der flexiblen Scherenkopplung ermöglichen, um die beiden Routenzugelemente voneinander bzw. um das Routenzugelement von dem Zugfahrzeug trennen zu können. Ebenso kann eine entsprechende Verbindung hergestellt werden.

Gemäß einem weiteren Aspekt der Erfindung ist das Halterungselement ausgebildet, mittels eines Sicherungselements am Routenzugselement oder am Zugfahrzeug gesichert zu werden. Als Sicherungselement kann beispielsweise ein Sicherungsring, ein Sicherungsstift oder ein Sicherungsbügel verwendet werden, welcher die Beweglichkeit des Halterungselements, welche zum Entfernen erforderlich ist, formschlüssig und bzw. oder kraftschlüssig unterbinden oder zumindest ausreichend einschränken kann. Ein derartiges Sicherungselement kann ein Lösen des Halterungselements z.B. durch Bewegungen verhindern, welche durch die Fahrt des Schleppverbunds verursacht werden können. Dies kann einen sicheren Halt der Halterungselements und damit der gesamten flexiblen Scherenkopplung ermöglichen.

Erfindungsgemäß ist das Routenzugelement mittels einer starren Scherenkopplung mit einem weiteren Routenzugelement zu einem ersten Routenzug verbunden, wobei die Routenzugelemente des ersten Routenzugs ausgebildet sind, auf wenigstens einer Seite der Querrichtung in der vertikalen Richtung unabhängig von der in Querrichtung gegenüberliegenden Seite gemeinsam abgesenkt und angehoben zu werden. Somit stellt der erste Routenzug mit seinen beiden starr mittels Scherenkopplung verbundener Routenzugelemente einen bekannten Routenzug dar. Durch die Verwendung der erfindungsgemäßen flexiblen Scherenkopplung kann auch dieser Routenzug als Ganzes gegenüber dem weiteren Routenzugelement bzw. gegenüber dem Zugfahrzeug abgesenkt und angehoben werden. Gleichzeitig kann der Routenzug als Ganzes lediglich einseitig abgesenkt und angehoben werden, wie es beispielsweise aus der DE 10 2016 121095 A1 bekannt ist.

So ist das Routenzugelement der DE 10 2016 121095 A1 bzw. dessen Rahmen ausgebildet, auf wenigstens einer Seite in der vertikalen Richtung unabhängig von der in Querrichtung gegenüberliegenden Seite abgesenkt und angehoben zu werden. Unter einer Seite ist entweder die rechte oder die linke Seite des Routenzugelements in der Querrichtung zu verstehen. Auf diese Weise ist es möglich, ein mit einem Logistikelement beladenes Routenzugelement nicht vollständig, d.h. mit seiner gesamten Fläche, sondern lediglich einseitig abzusenken. Auf diese Weise kann innerhalb des Routenzugelements eine schiefe Ebene geschaffen werden, von der das Logistikelement einfacher selbsttätig oder zumindest mit weniger Kraftaufwand eines Benutzers herunterrollen bzw. heruntergerollt werden kann als von einer horizontalen Ebene eines vollständig abgesenkten Routenzugelements. Dies kann den Benutzer bei der Entladung des Routenzugelements, insbesondere über die Dauer eines Arbeitstages zur Bedienung einer Routenzuganordnung bzw. eines Schleppverbunds mit mehreren Routenzugelementen, signifikant entlasten. Dies kann einer Erschöpfung sowie gesundheitlichen Problemen des Benutzers vorbeugen.

Dies kann auch dadurch weiter unterstützt werden, indem die beiden Logistikelementaufnahmen jeweils in ein Paar von Schrägflächen aufweisen, welche sich im Wesentlichen in der Querrichtung erstrecken und in der vertikalen Richtung dreieckig erhöht ausgebildet sind. Mit anderen Worten kann bei der Logistikelementaufnahme eine Dachkontur ausgebildet werden. Dies kann das Beladen der Routenzugelements durch den Benutzer für diesen erleichtern, da das Logistikelement, nachdem dessen vorderen Räder der jeweiligen Scheitelpunkt überwunden haben, vom Benutzer durch Ausnutzung der Schwerkraft des Logistikelement leichter bzw. selbsttätig in die aufgenommene Position geschoben werden kann.

Dabei kann sich das unabhängige Absenken und Anheben gemäß der vorliegenden Erfindung besonders vorteilhaft auf die Möglichkeiten des einseitigen Absenkens und Anhebens bei dem Routenzug der DE 10 2016 121 095 A1 auswirken, da durch die dort verwendete starre Scherenkopplung das einseitige Absenken und Anheben stärker behindert bzw. verhindert werden kann als ein beidseitiges Absenken und Anheben. Somit können die Eigenschaften und Vorteile der vorliegenden Erfindung gerade bei einem Routenzug der DE 10 2016 121 095 A1 besonders gut zur Geltung kommen.

Gemäß einem weiteren Aspekt der Erfindung weist die flexible Scherenkopplung, vorzugsweise und bzw. oder die starre Scherenkopplung, wenigstens ein flexibles Schutzelement, vorzugsweise ein Paar flexibler Schutzelemente, auf, welches ausgebildet und angeordnet ist, in den Zwischenraum zwischen zwei Routenzugselementen oder zwischen einem Routenzugselement und dem Zugfahrzeug im Wesentlichen in der Querrichtung hineinzuragen. Hierdurch kann verhindert bzw. zumindest erschwert werden, dass eine Person in diesen Zwischenraum gelangen kann, so dass der Schutz für Personen verbessert werden kann. Dies gilt insbesondere für Kurvenfahrten bzw. für zueinander um die Hochachse verdrehte Anordnungen der beiden Routenzugselemente bzw. des Routenzugselements gegenüber dem Zugfahrzeug, welche bei der Verwendung von Scherenkopplungen zu besonders großen Öffnungswinkeln der Zwischenräume führen können, in welche entsprechend einfach eine Person gelangen kann.

Dies kann erfindungsgemäß verhindert bzw. erschwert werden, indem der Zwischenraum durch das flexible Schutzelement teilweise eingenommen und so für Personen verringert wird. Auch kann der Zwischenraum durch das flexible Schutzelement für Personen besser kenntlich gemacht werden, was das Betreten des Zwischenraums durch Personen ebenfalls verhindern kann. Ferner kann verhindert bzw. erschwert werden, dass eine Person über die Scherenkopplung herübersteigen kann. Wird ein Paar flexibler Schutzelemente verwendet, so kann dies in der Querrichtung zu beiden Seiten hin erreicht werden. Insbesondere eine spiegelbildliche Ausgestaltung und Anordnung kann dies zu beiden Seiten hin gleichermaßen bewirken.

Dies kann insbesondere bei automatisierten Schleppverbünden wie z.B. bei einer von einem Fahrerlosen Transportfahrzeug (FTF) gezogenen Routenzuganordnung vorteilhaft sein, da dort keine Person als Bediener des Schleppverbunds andere Personen vom Betreten dieser Zwischenräume abhalten bzw. z.B. beim Anfahren darauf achten kann, dass sich keine Person in einem dieser Zwischenräume befindet. Dies kann die Sicherheit derartigen automatisierter Schleppverbünde erhöhen.

Dabei ein flexibles Schutzelement wie z.B. einen flexiblen Schlauch wie z.B. einen Wellschlauch oder dergleichen zu verwenden kann dahingehend vorteilhaft sein, dass das flexible Schutzelement sich den Relativbewegungen der beiden Routenzugselemente zueinander bzw. des Routenzugselements gegenüber dem Zugfahrzeug und dem hierdurch jeweils verursachten Zwischenraum möglichst gut anpassen kann, um die zuvor beschriebene Wirkung zu erreichen. Dabei ist zu bedenken, dass die Verwendung einer Scherenkopplung deutlich größere Zwischenräume zulassen kann als eine bekannte Deichsel.

Dieser Aspekt der vorliegenden Erfindung kann dabei allgemein auf Scherenkopplungen angewendet werden und ist somit unabhängig von der Verwendung einer flexiblen Scherenkopplung zu sehen.

Gemäß einem weiteren Aspekt der Erfindung ist das flexible Schutzelement mit jeweils einem Ende in der Querrichtung mittig an dem Routenzugselement oder an dem Zugfahrzeug angeordnet und derart ausgerichtet, so dass sich das flexible Schutzelement in der Querrichtung über die wesentliche Breite des Routenzugselements bzw. des Zugfahrzeugs in den Zwischenraum erstreckt. Mit anderen Worten kann eine in der Querrichtung etwa mittige Anordnung des flexiblen Schutzelements erfolgen, so dass ein sich bildender Zwischenraum mit einem möglichst kurzen flexiblen Schutzelement ausreichend blockiert und kenntlich gemacht werden kann, um die zuvor beschriebenen Eigenschaften und Vorteile zu erreichen. Bei einer paarweisen Anordnung zweier flexibler Schutzelemente können diese jeweils geringfügig in der Querrichtung zur Mitte versetzt angeordnet werden, so dass die Befestigungspunkte nahezu zusammenfallen und die zuvor beschriebenen Eigenschaften spiegelbildlich zu beiden Seiten in der Querrichtung erreicht werden können.

Gemäß einem weiteren Aspekt der Erfindung ist das flexible Schutzelement ein Kabelschlauch, welcher wenigstens eine elektrische Leitung, einen Hydraulikschlauch und bzw. oder einen Pneumatikschlauch zur Energieübertragung und bzw. oder zur Signalübertragung in sich aufnimmt. Hierdurch kann ein üblicherweise ohnehin vorhandenes Element des Routenzugelements verwendet werden, um die zuvor beschrieben Eigenschaften und Vorteile ohne zusätzliche Elemente zu erreichen. Dies kann den sonst hierfür erforderlichen Aufwand vermeiden.

Gemäß einem weiteren Aspekt der Erfindung weist wenigstens ein Routenzugselement wenigstens ein Hinweiselement auf, welches ausgebildet und angeordnet ist, sich in der vertikalen Richtung ausreichend zu erstrecken, um die optische Wahrnehmbarkeit des Routenzugelements für eine Person zu verbessern. Das Hinweiselement kann insbesondere als Fahne oder dergleichen ausgebildet sein, welche optisch gut wahrnehmbar für eine Person sein kann, ohne hierzu zu viel Gewicht aufzuweisen, Bauraum zu erfordern und bzw. oder Kosten zu verursachen. Insbesondere kann das Hinweiselement wie z.B. die Fahne mittels eines Ständers, einer Stange oder dergleichen als Hinweiselementhalterung wie z.B. als Fahnenstange gegenüber einem Rahmen oder dergleichen des Routenzugelements in der vertikalen Richtung angehoben werden, um von einer Person z.B. auf Außenhöhe oder zumindest deutlich oberhalb z.B. des Rahmens des Routenzugelements wahrgenommen zu werden. Dies kann die Wahrnehmbarkeit des Hinweiselements und damit des Routenzugelements verbessern.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Routenzugs;
- Fig. 2: eine weitere perspektivische Darstellung des Routenzugs der Fig. 1;
- Fig. 3: eine seitliche schematische Darstellung eines erfindungsgemäßen Schleppverbunds;

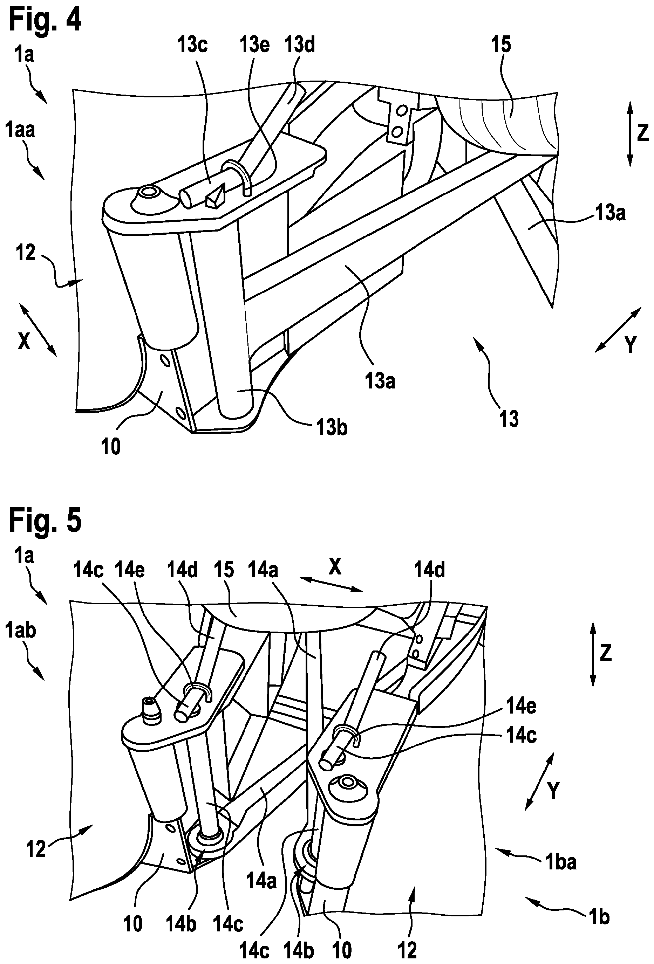

- Fig. 4: eine perspektivische schematische Darstellung einer starren Scherenkopplung;
- Fig. 5: eine perspektivische schematische Darstellung einer erfindungsgemäßen flexiblen Scherenkopplung;
- Fig. 6: eine perspektivische Detailansicht der Fig. 5; und
- Fig. 7: eine weitere perspektivische Detailansicht der Fig. 5.

Die o.g. Figuren werden in kartesischen Koordinaten betrachtet. Es erstreckt sich eine Längsrichtung X, welche auch als Tiefe X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

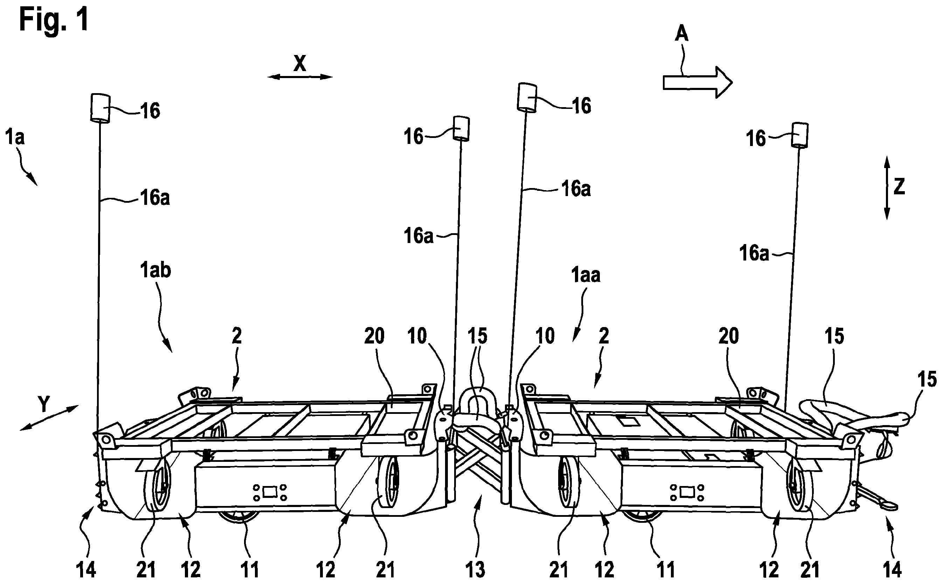

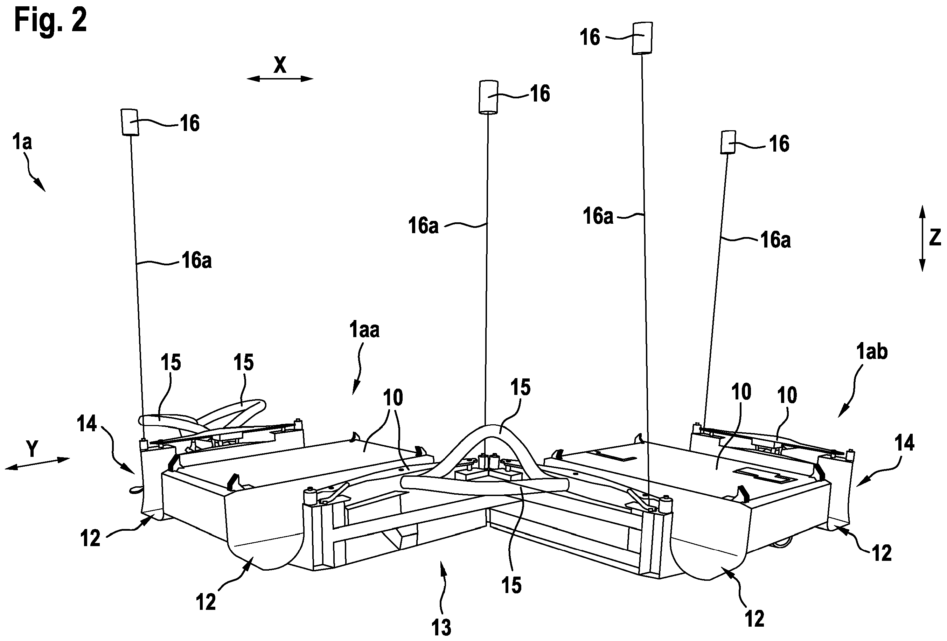

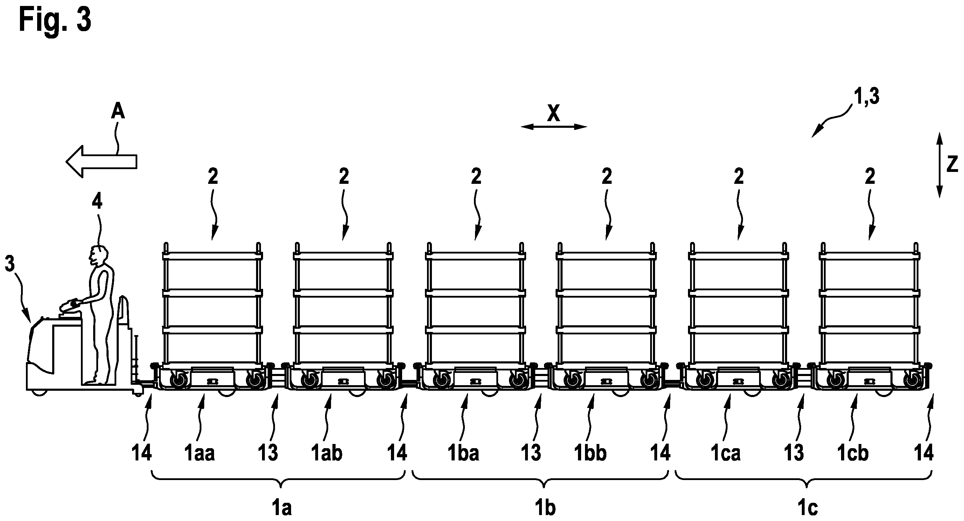

Es wird ein erfindungsgemäßer Routenzug 1a betrachtet, welcher einen ersten Routenzug 1a innerhalb einer Routenzuganordnung 1 darstellt, welche ferner einen zweiten Routenzug 1b und einen dritten Routenzug 1c aufweist. Jeder der drei Routenzüge 1a, 1b, 1c weist jeweils ein erstes Routenzugelement 1aa, 1ba, 1ca sowie ein zweites Routenzugelement 1ab, 1bb, 1cb auf, siehe z.B. Figuren 1 und 2. Die Routenzuganordnung 1 bildet zusammen mit einem Zugfahrzeug 3, welches von einer Person 4 als Bediener 4 bedient wird, einen Schleppverbund 1, 3, siehe z.B. Figur 3. Der Schleppverbund 1, 3 kann sich in einer Bewegungsrichtung A bzw. in einer Fahrtrichtung A bewegen.

Die Routenzugelemente 1aa-1cb selbst sind identisch ausgebildet. So weist jedes Routenzugelement 1aa-1cb einen Rahmen 10 auf, welcher als B-Rahmen bzw. als Überladerahmen ausgebildet ist und auch als Gestell 10 bezeichnet werden kann. An dem Gestell 10 ist jeweils ein Paar von Rädern 11 angeordnet, welche unabhängig voneinander in der Höhe Z angehoben und abgesenkt werden können. Hierdurch kann eine Seite der Querrichtung Y in der Höhe Z unabhängig von der in Querrichtung Y gegenüberliegenden Seite abgesenkt und angehoben werden. Die Räder 11 sind entgegen der Fahrtrichtung A zur Mitte versetzt angeordnet.

In der Fahrtrichtung A ist jeweils vor und hinter den Rädern 11 eine Logistikelementaufnahme 12 vorgesehen. Dort können in der Querrichtung Y Logistikelemente 2 in Form von Trolleys 2 mit ihren Rädern 21 eingeschoben bzw. entnommen werden. Auf den Rahmen 20 der Trolleys 2, welche die vier Räder 21 verbinden, können zu transportierende Gegenstände angeordnet werden (nicht dargestellt). Die Rahmen 20 der Trolleys 2 können auch als Gestelle 20 bezeichnet werden.

Jedes Routenzugelement 1aa-1cb weist zwei erfindungsgemäße Hinweiselemente 16 in Form von Fahnen 16 auf, welche jeweils mittels einer Hinweiselementhalterung 16a in Form einer Fahnenstange 16a gegenüber dem Rahmen 10 des jeweiligen Routenzugelements 1aa-1cb in der Höhe Z erhöht angeordnet sind, so dass eine Person 4 die Fahnen 16 optisch möglichst gut wahrnehmen kann. Dies soll verhindern, dass ein Routenzugelement 1aa-1cb, insbesondere ohne in der Höhe Z merkliche Beladung eines Trolleys 2, von der Person 4 übersehen werden kann, was zu Unfällen führen kann.

Die Routenzugelemente 1aa-1cb des Schleppverbunds 1, 3 sind abwechselnd durch starre Scherenkopplungen 13 und durch flexible Scherenkopplungen 14 miteinander verbunden. Hierdurch können die Vorteile von Scherenkopplungen 13, 14 zwischen allen Routenzugelementen 1aa-1cb genutzt werden, was dem Schleppverbund 1, 3 u.a. eine vergleichsweise geringe Länge, einen engen Kurvenradius etc. ermöglichen kann.

Innerhalb der drei Routenzüge 1a-1c sind die jeweiligen Routenzugelemente 1aa-1cb untereinander mit starren Scherenkopplungen 13 miteinander verbunden, so dass ein Routenzug 1a-1c jeweils lediglich als Ganzes einseitig oder beidseitig abgesenkt und angehoben werden kann. Dies kann die Verwendung der mechanisch einfacheren und kostengünstigeren starren Scherenkopplungen 13 an diesen Stellen ermöglichen.

Jede starre Scherenkopplung 13 weist hierzu ein Paar von sich überkreuzenden Verbindungselementen 13a auf, welche auch als Lenker 13a oder als Gestänge 13a bezeichnet werden können. Die beiden Lenker 13a weisen jeweils an ihren beiden Enden eine starre Halterungselementaufnahme 13b auf, welche sich mit einer Durchgangsöffnung (nicht dargestellt) in der Höhe Z erstreckt und auch als Hülse 13b bezeichnet werden kann. Durch die Hülse 13b hindurch wird jeweils in der Höhe Z ein Halterungselement 13c in Form eines Bolzens 13c geführt, welches ferner oben und unten durch Durchgangsöffnungen (nicht dargestellt) des Rahmens 10 des Routenzugelements 1aa-1cb geführt wird. Hierdurch kann eine um die Hochachse drehbewegliche Verbindung jeweils eines Endes eines Lenkers 13a mit dem jeweiligen Routenzugelement 1aa-1cb geschaffen werden, so dass jeweils eine starre Scherenkopplung 13 zwischen den beteiligten Routenzugelementen 1aa-1cb umgesetzt werden kann.

Die Bolzen 13c weisen jeweils an ihrem oberen Ende einen Handgriff 13d auf, an dem eine Person 4 den Bolzen 13c aus der Hülse 13b sowie aus dem Rahmen 10 herausziehen und hierdurch die drehbewegliche Verbindung zwischen den beteiligten Routenzugelementen 1aa-1cb trennen kann. Wird dies an den beiden Enden der Lenker 13a desselben Routenzugelements 1aa-1bc ausgeführt, so können die beiden Routenzugelemente 1aa-1bc dieser starren Scherenkopplung 13 voneinander getrennt werden. Umgekehrt können so zwei Routenzugelemente 1aa-1bc miteinander verbunden werden. Der Handgriff 13d kann mittels eines Sicherungselements 13e in der verbindenden Lage gesichert werden, um sich bei einer Fahrt des Schleppverbunds 1, 3 nicht zu lösen.

Die drei Routenzüge 1a-1c sind untereinander jedoch durch jeweils eine flexible Scherenkopplung 14 miteinander verbunden. Dies gilt ebenso für das erste Routenzugelement 1aa des ersten Routenzugs 1a gegenüber dem Zugfahrzeug 3. Die Elemente 14a-14f der flexiblen Scherenkopplungen 14 entsprechend dabei grundsätzlich den Elementen 13a-13e der zuvor beschriebenen starren Scherenkopplungen 13, d.h. auch hier sind sich kreuzende Verbindungselemente 14a in Form von Lenkern 14a bzw. Gestängen 14a vorhanden.

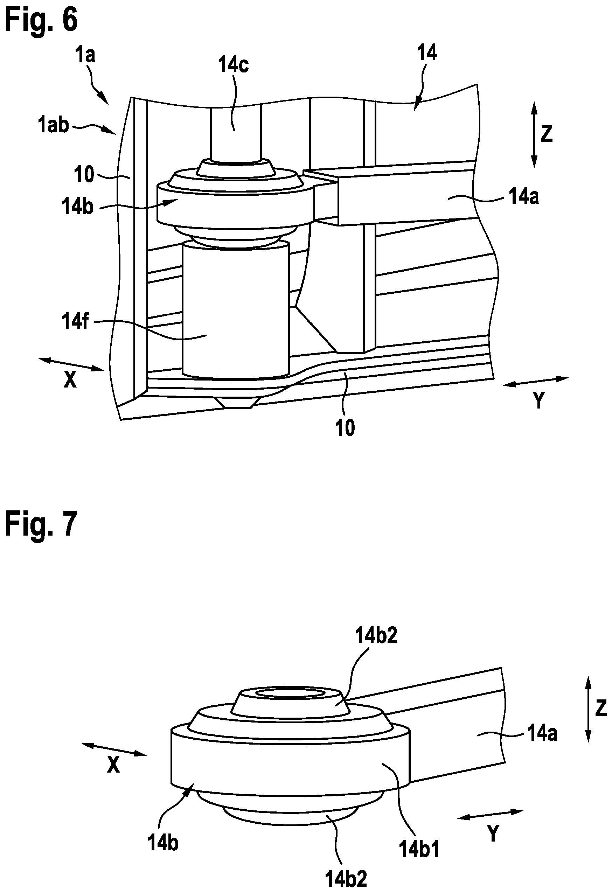

Jedoch weisen die Enden der Lenker 14a in diesem Fall jeweils eine flexible Halterungselementaufnahme 14b auf, welche im betrachteten Ausführungsbeispiel als Kugelkopfgelenk 14b ausgebildet sind und auch als Kugelkalottenkupplung 14b bezeichnet werden können. Jedes Kugelkopfgelenk 14b weist eine Kugelkalottenaufnahme 14b1 auf, welche feststehend am Ende des jeweiligen Lenkers 14a angeordnet ist. Innerhalb der Kugelkalottenaufnahme 14b ist eine Kugelkalotte 14b2 angeordnet, siehe z.B. Figuren 6 und 7, welche von der Kugelkalottenaufnahme 14b in der Höhe Z horizontal abschnittsweise umgriffen und so innerhalb der Kugelkalottenaufnahme 14b gehalten wird. Die Kugelkalotte 14b2 ist aufgrund der einander zugewandten jeweils kugelförmigen Oberflächen gegenüber der Kugelkalottenaufnahme 14b1 kardanisch drehbar.

Durch die Kugelkalotte 14b2 hindurch wird ein Halterungselement 14c in Form eines Bolzens 14c geführt, welches wie zuvor hinsichtlich der starren Scherenkopplung 13 beschrieben vom Rahmen 10 des Routenzugelements 1aa-1bc bzw. des Zugfahrzeugs 3 gehalten wird. Auch hier ist jeweils ein Handgriff 14d wie zuvor beschrieben vorhanden, welcher wie zuvor beschrieben mittels eines Sicherungselements 14e gesichert werden kann.

Ergänzend ist jeweils bei einem der beiden Lenker 14a einer flexiblen Scherenkopplung 14 an beiden Enden ein Abstandhalter 14f in Form einer geschlossenen Hülse 14f um den jeweiligen Bolzen 14c herum angeordnet. Hierdurch kann das jeweilige Kugelkopfgelenk 14b in der Höhe Z gegenüber dem Rahmen 10 des Routenzugelements 1aa-1cb angehoben werden, so dass sich die beiden Lenker 14a übereinanderliegend überkreuzen können und der höher angeordnete Lenken 14a mit seinen beiden Enden auf dem jeweiligen Abstandshalter 14f aufliegen kann.

Unabhängig von der Verwendung der Scherenkopplungen 13, 14 ist bei jeder Scherenkopplung 13, 14 jeweils ein Paar von flexiblen Schutzelementen 15 angeordnet, welche primär als Kabelschläuche 15 zur Aufnahme elektrischer Leitungen zur Energieübertragung sowie zur Signalübertragung dienen. Zusätzlich werden diese Kabelschläuche 15 erfindungsgemäß dazu verwendet, seitlich in der Querrichtung Y in die Zwischenräume hineinzuragen, welche sich zwischen den Routenzugelementen 1aa-1cb bzw. gegenüber dem Zugfahrzeug 3 bilden und insbesondere bei Drehbewegungen eines Routenzugelements 1aa-1cb gegenüber einem weiteren Routenzugelement 1aa-1cb bzw. gegenüber dem Zugfahrzeug 3 wie z.B. bei einer Kurvenfahrt vergrößern können.

Daher werden die Kabelschläuche 15 paarweise und zur Fahrtrichtung A in der Querrichtung Y spiegelsymmetrisch angeordnet, so dass sie jeweils mit ihren beiden Enden möglichst nahe beieinander am Rahmen 10 der Routenzugelemente 1aa-1cb bzw. des Zugfahrzeugs 3 angeordnet sind. Ferner sind die Kabelschläuche 15 ausreichend lang dimensioniert, so dass sie sich bei zwei geradlinig zueinander ausgerichteten Routenzugelementen 1aa-1cb schlaufenartig in der Querrichtung Y bis etwa über die gesamte Breite der Routenzugelemente 1aa-1cb erstrecken, siehe z.B. Figur 1. Hierdurch kann in dieser Anordnung der Zwischenraum möglichst zwischen den Routenzugelementen 1aa-1cb bzw. einem Routenzugelement 1aa und dem Zugfahrzeug 3 vollständig ausgefüllt und somit optisch sowie körperlich ausgefüllt werden um zu verhindern, dass eine Person 4 in diesen Zwischenraum gelangen kann.

Wird eine etwa 90° Drehung der beiden Routenzugelemente 1aa-1cb zueinander ausgeführt, sind die Kabelschläuche 15 noch ausreichend dimensioniert, um diesen Zwischenraum zumindest ausreichend zu füllen um eine Person 4 davon abzuhalten, an dieser Stelle über die Scherenkopplung 13, 14 hinwegzusteigen und lieber um den Schleppverbund 1, 3 herum zu gehen. In dieser Konstellation spannt sich der nach außen zeigende Kabelschlauch 15 auf der offenen Seite des Zwischenraums vor die Lenker 13a, 14a der Scherenkopplung 13, 14. Dies kann jeweils die Sicherheit des Schleppverbunds 1, 3 für Personen 4 erhöhen.

Von dem beschriebenen Schleppverbund 1, 3 können beim Fahren problemlos Rampen und dergleichen von 10 % Steigung überfahren werden. Dabei haben beide Räderpaare des Routenzugs 1a-1c stets Bodenkontakt.

### BEZUGSZEICHENLISTE (Teil der Beschreibung)

- A: Bewegungsrichtung; Fahrtrichtung
- X: Längsrichtung; Tiefe
- Y: Querrichtung, Breite
- Z: vertikale Richtung; Höhe

- 1: Routenzuganordnung
- 1a: erster Routenzug
- 1aa: erstes Routenzugelement bzw. erster Routenzuganhänger des ersten Routenzugs 1a
- 1ab: zweites Routenzugelement bzw. zweiter Routenzuganhänger des ersten Routenzugs 1a
- 1b: zweiter Routenzug
- 1ba: erstes Routenzugelement bzw. erster Routenzuganhänger des zweiten Routenzugs 1b
- 1bb: zweites Routenzugelement bzw. zweiter Routenzuganhänger des zweiten Routenzugs 1b
- 1c: dritter Routenzug
- 1ca: erstes Routenzugelement bzw. erster Routenzuganhänger des dritten Routenzugs 1c
- 1cb: zweites Routenzugelement bzw. zweiter Routenzuganhänger des dritten Routenzugs 1c
- 10: Rahmen eines Routenzugelements 1a, 1b; Gestell eines Routenzugelements 1a, 1b
- 11: Räder eines Routenzugelements 1a, 1b
- 12: Logistikelementaufnahmen eines Routenzugelements 1a, 1b
- 13: starre Scherenkopplung
- 13a: Verbindungselemente; Lenker; Gestänge
- 13b: starre Halterungselementaufnahme; Hülse
- 13c: Halterungselement; Bolzen
- 13d: Handgriff
- 13e: Sicherungselement
- 14: flexible Scherenkopplung
- 14a: Verbindungselemente; Lenker; Gestänge
- 14b: flexible Halterungselementaufnahme; Kugelkopfgelenk; Kugelkalottenkupplung
- 14b1: Kugelkalottenaufnahme
- 14b2: Kugelkalotte
- 14c: Halterungselement; Bolzen
- 14d: Handgriff
- 14e: Sicherungselement
- 14f: Abstandshalter; Hülse
- 15: flexible Schutzelemente; Kabelschläuche
- 16: Hinweiselemente; Fahnen
- 16a: Hinweiselementhalterungen; Fahnenstangen

- 2: Logistikelemente; Trolleys
- 20: Rahmen eines Logistikelements 2; Gestell eines Logistikelements 2
- 21: Räder eines Logistikelements 2

- 3: Zugfahrzeug

- 4: Person; Bediener

## Patentansprüche

1. Routenzuganordnung (1) oder Schleppverbund (1, 3) mit
einem Routenzugelement (1aa; 1ab), welches ausgebildet ist, wenigstens ein Logistikelement (2) aufzunehmen, und mit
einem weiteren Routenzugelement (1ba), welches ausgebildet ist, wenigstens ein Logistikelement (2) aufzunehmen, und/oder mit
einem Zugfahrzeug (3),
wobei das Routenzugelement (1aa; 1ab) (jeweils) mittels einer flexiblen Scherenkopplung (14) mit dem weiteren Routenzugelement (1ba) und/oder mit dem Zugfahrzeug (3) verbunden ist,
wobei das Routenzugelement (1aa; 1ab) mittels einer starren Scherenkopplung (13) mit einem weiteren Routenzugelement (1aa; 1ab) zu einem ersten Routenzug (1a) verbunden ist,
wobei die Routenzugelemente (1aa, 1ab) des ersten Routenzugs (1a) ausgebildet sind, auf wenigstens einer Seite der Querrichtung (Y) in der vertikalen Richtung (Z) unabhängig von der in Querrichtung (Y) gegenüberliegenden Seite gemeinsam abgesenkt und angehoben zu werden,
wobei die flexible Scherenkopplung (14) zwei sich kreuzende Verbindungselemente (14a) aufweist, welche wenigstens einseitig, vorzugsweise beidseitig, mittels jeweils einer flexiblen Halterungselementaufnahme (14b) mit einem Halterungselement (14c) eines der Routenzugselemente (1aa; 1ab; 1ba) oder des Zugfahrzeugs (3) verbunden sind,
**dadurch gekennzeichnet, dass**
die flexible Halterungselementaufnahme (14b) in der vertikalen Richtung (Z) beweglich an dem Halterungselement (14c) angeordnet ist.

2. Routenzuganordnung (1) oder Schleppverbund (1, 3) nach Anspruch 1, **dadurch gekennzeichnet, dass**
die flexible Halterungselementaufnahme (14b) als Kugelkopfgelenk (14b) ausgebildet ist, welches das Halterungselement (14c) als Bolzen (14c) aufnimmt.

3. Routenzuganordnung (1) oder Schleppverbund (1, 3) nach Anspruch 2, **dadurch gekennzeichnet, dass**
das Kugelkopfgelenk (14b) eine Kugelkalotte (14b2) aufweist, welche am Bolzen (14c) angeordnet ist, und dass
das Kugelkopfgelenk (14b) eine Kugelkalottenaufnahme (14b1) aufweist, welche am Verbindungselemente (14a) angeordnet ist.

4. Routenzuganordnung (1) oder Schleppverbund (1, 3) nach Anspruch 3, **dadurch gekennzeichnet, dass**
die flexible Scherenkopplung (14) wenigstens einen Abstandshalter (14f) aufweist, welcher ausgebildet und angeordnet ist, die flexible Halterungselementaufnahme (14b) in der vertikalen Richtung (Z) oberhalb einer vorbestimmten Höhe zu halten.

5. Routenzuganordnung (1) oder Schleppverbund (1, 3) nach Anspruch 4, **dadurch gekennzeichnet, dass**
der Abstandshalter (14f) das Halterungselement (14c) zumindest abschnittsweise umschließt.

6. Routenzuganordnung (1) oder Schleppverbund (1, 3) nach einem der vorangehenden Ansprüche, **dadurch gekennzeichnet, dass**
das Halterungselement (14c) gegenüber der flexiblen Halterungselementaufnahme (14b) entfernbar ausgebildet ist.

7. Routenzuganordnung (1) oder Schleppverbund (1, 3) nach einem der vorangehenden Ansprüche, **dadurch gekennzeichnet, dass**
das Halterungselement (14c) ausgebildet ist, mittels eines Sicherungselements (14e) am Routenzugselement (1aa; 1ab; 1ba) oder am Zugfahrzeug (3) gesichert zu werden.

8. Routenzuganordnung (1) oder Schleppverbund (1, 3) nach einem der vorangehenden Ansprüche, **dadurch gekennzeichnet, dass**
die flexible Scherenkopplung (14), vorzugsweise und/oder die starre Scherenkopplung (13), wenigstens ein flexibles Schutzelement (15), vorzugsweise ein Paar flexibler Schutzelemente (15), aufweist, welches ausgebildet und angeordnet ist, in den Zwischenraum zwischen zwei Routenzugselementen (1aa; 1ab; 1ba) oder zwischen einem Routenzugselement (1aa; 1ab; 1ba) und dem Zugfahrzeug (3) im Wesentlichen in der Querrichtung (Y) hineinzuragen.

9. Routenzuganordnung (1) oder Schleppverbund (1, 3) nach Anspruch 8, **dadurch gekennzeichnet, dass**
das flexible Schutzelement (15) mit jeweils einem Ende in der Querrichtung (Y) mittig an dem Routenzugselement (1aa; 1ab; 1ba) oder an dem Zugfahrzeug (3) angeordnet und derart ausgerichtet ist, so dass sich das flexible Schutzelement (15) in der Querrichtung (Y) über die wesentliche Breite des Routenzugselements (1aa; 1ab; 1ba) bzw. des Zugfahrzeugs (3) in den Zwischenraum erstreckt.

10. Routenzuganordnung (1) oder Schleppverbund (1, 3) nach Anspruch 8 oder 9, **dadurch gekennzeichnet, dass**
das flexible Schutzelement (15) ein Kabelschlauch (15) ist, welcher wenigstens eine elektrische Leitung, einen Hydraulikschlauch und/oder einen Pneumatikschlauch zur Energieübertragung und/oder zur Signalübertragung in sich aufnimmt.

11. Routenzuganordnung (1) oder Schleppverbund (1, 3) nach einem der vorangehenden Ansprüche, **dadurch gekennzeichnet, dass**
wenigstens ein Routenzugselement (1aa; 1ab; 1ba) wenigstens ein Hinweiselement (16) aufweist, welches ausgebildet und angeordnet ist, sich in der vertikalen Richtung (Z) ausreichend zu erstrecken, um die optische Wahrnehmbarkeit des Routenzugelements (1aa; 1ab; 1ba) für eine Person (4) zu verbessern.

## Claims

1. A route train assembly (1) or a towing combination (1, 3) comprising
a route train element (1aa; 1ab), which is configured to accommodate at least one logistics element (2), and comprising
a further route train element (1ba), which is configured to accommodate at least one logistics element (2), and/or
a towing vehicle (3),
wherein the route train element (1aa; 1ab) is (in each case) connected to the other route train element (1ba) and/or to the towing vehicle (3) by means of a flexible scissor coupling (14),
wherein the route train element (1aa; 1ab) is connected to another route train element (1aa; 1ab) to form a first route train (1a),
wherein the route train elements (1aa, 1ab) of the first route train (1a) are designed to be lowered and raised together in the vertical direction (Z) on at least one side of the transverse direction (Y), independently of the side opposite in the transverse direction (Y),
wherein the flexible scissor coupling (14) comprises two intersecting connecting elements (14a) which are connected, on at least one side, preferably on both sides, by means of a respective flexible mounting element receptacle (14b) to a mounting element (14c) of one of the trailer train elements (1aa; 1ab; 1ba) or the towing vehicle (3),
**characterized in that**
the flexible mounting element receptacle (14b) is arranged on the mounting element (14c) so as to be movable in the vertical direction (Z).

2. Route train assembly (1) or towing combination (1, 3) according to claim 1, **characterized in that**
the flexible mounting element receptacle (14b) is designed as a ball-and-socket joint (14b), which receives the mounting element (14c) as a bolt (14c).

3. Route train assembly (1) or a towing combination (1, 3) according to claim 2, **characterized in that**
the ball-and-socket joint (14b) comprises a spherical cap (14b2) arranged on the pin (14c), and **in that**
the ball-and-socket joint (14b) comprises a spherical socket (14b1) arranged on the connecting element (14a).

4. Route train assembly (1) or a towing combination (1, 3) according to claim 3, **characterized in that**
the flexible scissor coupling (14) comprises at least one spacer (14f) that is configured and arranged to hold the flexible mounting element receptacle (14b) above a predetermined height in the vertical direction (Z).

5. Route train assembly (1) or towing combination (1, 3) according to claim 4, **characterized in that**
the spacer (14f) at least partially encloses the mounting element (14c).

6. Route train assembly (1) or a towing combination (1, 3) according to any one of the preceding claims, **characterized in that**
the mounting element (14c) is designed to be removable from the flexible mounting element receptacle (14b).

7. Route train assembly (1) or towing combination (1, 3) according to any one of the preceding claims, **characterized in that**
the mounting element (14c) is configured to be secured to the route train element (1aa; 1ab; 1ba) or to the towing vehicle (3) by means of a securing element (14e).

8. Route train assembly (1) or towing combination (1, 3) according to any one of the preceding claims, **characterized in that**
the flexible scissor coupling (14), preferably and/or the rigid scissor coupling (13), comprises at least one flexible protective element (15), preferably a pair of flexible protective elements (15), which is configured and arranged to protrude into the space between two road train elements (1aa; 1ab; 1ba) or between a road train element (1aa; 1ab; 1ba) and the towing vehicle (3) substantially in the transverse direction (Y).

9. Road train assembly (1) or towing combination (1, 3) according to claim 8, **characterized in that**
the flexible protective element (15) is arranged with one end in the transverse direction (Y) centrally on the road train element (1aa; 1ab; 1ba) or the towing vehicle (3) in the transverse direction (Y) and is oriented such that the flexible protective element (15) extends into the gap in the transverse direction (Y) across substantially the entire width of the road train element (1aa; 1ab; 1ba) or the towing vehicle (3), respectively.

10. Road train assembly (1) or towing combination (1, 3) according to claim 8 or 9, **characterized in that**
the flexible protective element (15) is a cable conduit (15) that accommodates at least one electrical cable, a hydraulic hose, and/or a pneumatic hose for power transmission and/or signal transmission.

11. Road train assembly (1) or towing combination (1, 3) according to any one of the preceding claims, **characterized in that**
at least one convoy element (1aa; 1ab; 1ba) comprises at least one indicator element (16) that is configured and arranged to extend sufficiently in the vertical direction (Z) to improve the visual visibility of the route train element (1aa; 1ab; 1ba) to a person (4).

## Revendications

1. Ensemble de train routier (1) ou convoi remorqué (1, 3) comprenant
un élément de train routier (1aa; 1ab), qui est conçu pour recevoir au moins un élément logistique (2), et comprenant
un autre élément de convoi (1ba), qui est conçu pour recevoir au moins un élément logistique (2), et/ou
un véhicule tracteur (3),
l'élément de convoi (1aa; 1ab) étant relié (respectivement) à l'autre élément de convoi routier (1ba) et/ou au véhicule tracteur (3) au moyen d'un accouplement en ciseaux flexible (14),
l'élément de convoi routier (1aa; 1ab) étant relié à un autre élément de convoi routier (1aa; 1ab) pour former un premier train routier (1a),
les éléments de train routier (1aa, 1ab) du premier train routier (1a) étant conçus pour être abaissés et relevés conjointement, sur au moins un côté de la direction transversale (Y) dans la direction verticale (Z), indépendamment du côté opposé dans la direction transversale (Y),
l'accouplement en ciseaux flexible (14) comportant deux éléments de liaison (14a) qui se croisent et qui sont reliés, au moins d'un côté, de préférence des deux côtés, au moyen d'un logement d'élément de fixation flexible (14b) respectif, à un élément de fixation (14c) de l'un des éléments de train routier (1aa; 1ab; 1ba) ou du véhicule tracteur (3),
**caractérisé en ce que**
le logement d'élément de fixation flexible (14b) est disposé de manière mobile dans la direction verticale (Z) sur l'élément de fixation (14c).

2. Ensemble de train routier (1) ou convoi remorqué (1, 3) selon la revendication 1, **caractérisé en ce que**
le logement flexible (14b) pour élément de fixation est réalisé sous la forme d'une articulation à rotule (14b) qui reçoit l'élément de fixation (14c) sous la forme d'un axe (14c).

3. Ensemble de train routier (1) ou convoi remorqué (1, 3) selon la revendication 2, **caractérisé en ce que**
l'articulation à rotule (14b) comporte une calotte sphérique (14b2) qui est disposée sur le goujon (14c), et **en ce que**
l'articulation à rotule (14b) comporte un logement de calotte sphérique (14b1) qui est disposé sur l'élément de liaison (14a).

4. Ensemble de train routier (1) ou convoi remorqué (1, 3) selon la revendication 3, **caractérisé en ce que**
l'accouplement à ciseaux flexible (14) comporte au moins une entretoise (14f) qui est conçue et disposée de manière à maintenir le logement flexible de l'élément de fixation (14b) au-dessus d'une hauteur prédéterminée dans la direction verticale (Z).

5. Ensemble de train routier (1) ou convoi remorqué (1, 3) selon la revendication 4, **caractérisé en ce que**
l'entretoise (14f) entoure l'élément de fixation (14c) au moins par sections.

6. Ensemble de train routier (1) ou convoi remorqué (1, 3) selon l'une des revendications précédentes, **caractérisé en ce que**
l'élément de fixation (14c) est conçu pour pouvoir être retiré du logement flexible (14b) destiné à l'élément de fixation.

7. Ensemble de train routier (1) ou convoi remorqué (1, 3) selon l'une des revendications précédentes, **caractérisé en ce que**
l'élément de fixation (14c) est conçu pour être fixé à l'élément du train routier (1aa; 1ab ; 1ba) ou au véhicule tracteur (3) au moyen d'un élément de blocage (14e).

8. Ensemble de train routier (1) ou convoi remorqué (1, 3) selon l'une des revendications précédentes, **caractérisé en ce que**
l'accouplement en ciseaux flexible (14), de préférence et/ou l'accouplement en ciseaux rigide (13), comporte au moins un élément de protection flexible (15), de préférence une paire d'éléments de protection flexibles (15), qui est conçu et disposé de manière à s'étendre dans l'espace entre deux éléments de convoi routier (1aa; 1ab ; 1ba) ou entre un élément de convoi routier (1aa; 1ab; 1ba) et le véhicule tracteur (3) essentiellement dans la direction transversale (Y).

9. Ensemble de train routier (1) ou convoi remorqué (1, 3) selon la revendication 8, **caractérisé en ce que**
l'élément de protection flexible (15) est disposé, par une extrémité respective, au centre dans la direction transversale (Y) sur l'élément de train routier (1aa; 1ab ; 1ba) ou sur le véhicule tracteur (3) dans la direction transversale (Y) et est orienté de telle sorte que l'élément de protection flexible (15) s'étende dans l'espace intermédiaire dans la direction transversale (Y) sur la quasi-totalité de la largeur de l'élément de convoi (1aa; 1ab; 1ba) ou du véhicule tracteur (3).

10. Ensemble de train routier (1) ou convoi remorqué (1, 3) selon la revendication 8 ou 9, **caractérisé en ce que**
l'élément de protection flexible (15) est une gaine de câbles (15) qui renferme au moins un conducteur électrique, un flexible hydraulique et/ou un flexible pneumatique destinés à la transmission d'énergie et/ou à la transmission de signaux.

11. Ensemble de train routier (1) ou convoi remorqué (1, 3) selon l'une des revendications précédentes, **caractérisé en ce que**
au moins un élément de convoi routier (1aa; 1ab; 1ba) comporte au moins un élément de signalisation (16) qui est conçu et disposé de manière à s'étendre suffisamment dans la direction verticale (Z) pour améliorer la visibilité de l'élément de train routier (1aa; 1ab; 1ba) pour une personne (4).
